# EUROPÄISCHE PATENTSCHRIFT

(11) **EP 0 328 007 B1**
(45) Veröffentlichungstag und Bekanntmachung des Hinweises auf die Patenterteilung: **13.04.1994**
(21) Anmeldenummer: 89101968.9
(22) Anmeldetag: 04.02.1989
(51) Int. Cl.: F16H 57/02

(54) **Gebaute Getriebewelle**
Assembled gear axle
Arbre de transmission assemblé

(30) Priorität: 07.02.1988 DE 3803684
(43) Veröffentlichungstag der Anmeldung: 16.08.1989
(73) Patentinhaber: Emitec Gesellschaft für Emissionstechnologie mbH, 53797 Lohmar (DE)
(72) Erfinder: Swars, Helmut, D-5060 Bergisch Gladbach (DE)
(74) Vertreter: COHAUSZ HASE DAWIDOWICZ & PARTNER

(56) Entgegenhaltungen:
- EP-A- 0 052 077
- EP-A- 0 054 937
- WO-A-86/00674
- DE-C- 481 108
- FR-A- 744 131
- FR-A- 1 523 514
- GB-A- 2 156 485
- ENGINEERS' DIGEST, Band 22, Nr. 3, März 1961, Seite 86; W.E. CAWLEY: "Shafts made of prestressed concentric tubes and their advantages"

## Beschreibung

Die Erfindung betrifft eine gebaute Getriebewelle , bei der einzelne Antriebselemente, insbesondere Zahnräder drehfest auf einer Hohlwelle mit in zumindest in einer Richtung abgestuften Sitzdurchmessern festgelegt sind sowie eine nach diesem Verfahren hergestellte Welle. Weiterhin betrifft die Erfindung ein Verfahren zur Herstellung einer gebauten Getriebewelle und eine Vorrichtung in Form einer Druckaufgabesonde zur Durchführung des Verfahrens.

Gebaute Getriebewellen der genannten Art sind bekannt bei denen zur Gewichtsersparnis bereits eine Hohlwelle verwendet wird. Aus der DE-A-34 25 600 ist eine derartige Welle bekannt, die in einem Gesenk in der Weise aufgeweitet wird, daß eine abgestufte Welle mit verschiedenen Sitzdurchmessern für die Antriebselemente entsteht, wobei diese Sitzbereiche nach Art von Polygonen ausgebildet sind, auf die die Antriebeselemente in formschlüssigem Eingriff aufgeschoben werden.

Ein anderes bekanntes Verfahren zur Herstellung einer derartigen Welle besteht darin, ein ursprünglich gerades Rohr an den Enden durch Abstrecken oder Hämmern im Durchmesser zu reduzieren, so daß eine ähnlich Hohlwelle mit zu den Enden hin abgestuften Abschnitten entsteht, wobei die vorgesehenen Sitzbereiche für die Antriebselemente durch vorzugsweise spanlose Umformung mit Verzahnungen zur formschlüssigen Festlegung von Antriebselementen versehen werden. Weiterhin ist es auch bereits bekannt, eine gestufte Hohlwelle mit Außenverzahnungen durch inneres Aufweiten eines Rohres in einem Gesenk herzustellen, wobei die notwendigen Verzahnungen in den Sitzbereichen gleich während des Umformvorganges hergestellt werden. Hierbei kann eine abgestufte Hohlwelle aus mehreren einzelnen Teilen zusammengesetzt sein (DE-C-29 14 657). Das hiermit beschriebene Verfahren bedarf eines teueren an das einzelne Werkstück angepaßten Gesenks; die eingesetzte Energie ist aufgrund der hohen Umformraten relativ hoch.

Aus der FR-A-744 131 ist es bekannt, aus Flachmaterial zu Hohlkörpern rundgewalzte, schräggeschlitzte Hülsen herzustellen, die als Federhülsen in Fällen verwendet werden, in denen Hülsenkörper oder Rohrkörper paßgenau in Bohrungen eingesetzt werden müssen. Zum Beispiel wird vorgeschlagen, solche Federhülsen als Verbindungshülsen zwischen zwei aneinanderstoßenden geraden Rohrstücken zu verwenden. Weiterhin wird die Verwendung insbesondere zweier ineinandergesteckter Federhülsen dieser Art als Rohrkörper vorgeschlagen, auf den Antriebselemente oder Gleitlagerhülsen kraftschlüssig aufgeschoben sind. Ein abgestufter Verlauf dieser Rohrkörper in zumindest einer Richtung ist dabei nicht vorgesehen.

Der vorliegenden Erfindung liegt die Aufgabe zugrunde, Wellen der eingangs genannten Art, insbesondere eine Getriebewelle für Stufengetriebe bereitzustellen, die sich durch billige Herstellung, leichte Bauweise, Bruchfestigkeit und günstige Schwingungseigenschaften auszeichnen und ein Verfahren zur Herstellung von Wellen anzugeben, welches sich mit geringem Anpassungsaufwand für Erzeugnisse verschiedenster Form eignet und nur geringen Energieeinsatzes bedarf. Auch bei komplizierten Formen des Rohrkörpers sollen keine Schweißvorgänge erforderlich werden.

Die Lösung besteht darin, daß die Hohlwelle zumindest aus mehreren zur Bildung der abgestuften Sitzdurchmesser für die Antriebselemente ineinandergesteckten Rohrstücken oder Hülsen zusammengesetzt ist, die im Bereich ihrer radialen Überdeckung durch Aufweiten des inneren Rohrstücks in das äußere Rohrstück, im wesentlichen kraftschlüssig miteinander verbunden sind, und daß die Antriebselemente auf den jeweiligen Rohrstücken oder Hülsen der Hohlwelle im wesentlichen kraftschlüssig festgelegt sind. Hierbei werden insbesondere mehrere Rohrstücke oder Hülsen ineinandergesteckt und zur Bildung der abgestuften Hohlwelle jeweils der innere Rohrabschnitt eines dadurch gebildeten Überdeckungsbereiches zur insbesondere kraftschlüssigen Verbindung von innen aufgeweitet.

Hierbei werden unkomplizierte gerade Rohrstücke, die gegebenenfalls aus Normmaterial genommen werden können, mit Spielpassung ineinandergesteckt und fortschreitend von größeren Innendurchmessern zu kleineren Innendurchmessern, d. h. in der Regel von der Wellenmitte zu den Wellenenden hin nacheinander in an sich bekannter Weise miteinander verbunden. Die Reihenfolge des Fügens ist je nach Konstruktion des Rohrkörpers auch umkehrbar, d.h. sie kann auch in einer Richtung fortschreitend oder von außen nach innen erfolgen, was bei einer einstückigen Welle nicht möglich ist. Die auf der Welle festzulegenden Antriebselemente, die vorzugsweise im Bereich der Überdeckung zweier Rohrstücke aufgeschoben werden, soweit sie höhere Drehmomente zu ertragen haben, werden entweder in einem weiteren Aufweitschritt nach dem bereits erfolgten Fügen der Rohrstücke durch inneres Druckbeaufschlagen und Aufweiten der Verbindungsstelle festgelegt oder in einem einzigen Fügeschritt, bei dem gleichzeitig die ineinandergesteckten Rohrstücke gemeinsam gegenüber dem Antriebselement aufgeweitet werden.

In bevorzugter Weise können äußere Rohrstücke oder Hülsen, die zugleich als Lagerstellen von Gleit- oder Wälzlagern dienen bereits vor dem Fügen gehärtet und geschliffen sein, so daß nach der bevorzugten Weiterbildung des Verfahrens das Aufweiten der Verbindungsabschnitte zum fertigen Erzeugnis führt. Die jeweils als Sitze für die Antriebselemente oder als Lagerstellen dienenden Rohrstücke oder Hülsen können gegebenenfalls auch bereits mechanisch bearbeitet sein, um Axialanschläge für die Antriebselemente bzw. die Wälzkörper zu bilden.

Soweit hier zur Durchführung des Verfahrens das innere Aufweiten angesprochen ist, ist in der Regel nicht ein mechanischer Vorgang, sondern bevorzugt - wenn auch nicht ausschließlich - ein Aufweiten durch innere hydrauliche Druckbeaufschlagung gemeint, die sich axial auf die Überdeckungsbereiche der ineinandergesteckten Rohrstücke oder Hülsen beschränkt.

Eine erfindungsgemäß angepaßte Vorrichtung in Form einer Druckmittelsonde kann für Serienprodukte so ausgestaltet sein, daß sie verschiedene Aufweitabschnitte gleichzeitig innen beaufschlagt, wobei durch besondere Anpassung in den einzelnen Aufweitabschnitten unterschiedliche Druckniveaus bei gleichem Vordruck des Druckerzeugers eingestellt werden können. Eine nach dem vorstehenden Verfahren hergestellte erfindungsgemäße Getriebewelle zeichnet sich dadurch aus, daß die Hohlwelle aus mehreren ineinandergesteckten Rohrstücken oder Hülsen zusammengesetzt ist, die durch inneres Aufweiten des jeweils inneren Rohrstückes im Bereich der radialen Überdeckung im wesentlichen kraftschlüssig miteinander verbunden sind, und daß die Antriebselemente auf durch inneres Aufweiten des oder der jeweilen Rohrstücke oder Hülsen auf zugeordneten Längsabschnitten im wesentlichen kraftschlüssig auf der Hohlwelle festgelegt sind. Die Einschränkung "im wesentlichen kraftschlüssig" soll hierbei bedeuten, daß durch geeignete Oberflächenbehandlung und/oder Druckbeaufschlagung die kraftschlüssige Verbindung der glattflächigen Teile in stoffschlüssige Verbindung übergehen kann, wobei jedoch nach dem Fügen bei der Druckentlastung eine Vorspannung und damit ein kraftschlüssiger Anteil erhalten bleibt.

Geeignete und vorteilhafte Ergebnisse lassen sich in jedem Fall dann einstellen, wenn von mehreren ineinandergesteckten Rohrstücken oder Hülsen das jeweils innere die geringste Streckgrenze des Materials und nach außen schrittweise zunehmend das jeweils äußere bzw. das Antriebselement die höchste Streckgrenze des Materials aufweist. Diese Vorschrift führt in erster Näherung zu optimalen Preßspannungsverteilungen und zu funktionstüchtigen Wellen für hohe Drehmomentwerte.

Besonders günstig ist es, daß jeweils in Richtung des Drehmomentflusses, d.h. einseitig oder beidseitig axial anstoßend an ein Antriebselement Hülsen auf das Rohrstück aufgeschoben und zur Vermeidung eines Steifigkeitssprunges in der Torsionsfestigkeit unmittelbar am Antriebselement in gleicher Weise im wesentlichen kraftschlüssig festgelegt sind. Hierdurch kann vermieden werden, daß das Rohr unmittelbar im Anschluß an und damit bis unter das Antriebselement tordiert wird. Der hierbei auftretende Mikroschlupf würde zur Passungskorrosion führen und die Festigkeit der Verbindung herabsetzen. Durch die angesetzten Hülsen wird dieser Bereich des Mikroschlupfes auf ein selber nicht drehmomentbelastetes Schutzelement verlagert. Eine vertretbare Alternative besteht in einem überlangen Sitzbereich des Antriebselementes, der damit die zuvor genannten Hülsen einstückig umfassen würde.

Wie bereits weiter oben erwähnt, geht eine festigkeitsmäßig günstige Ausgestaltung der Welle dahin, daß die Antriebselemente jeweils im Bereich der Überdeckung von zumindest zwei ineinandergesteckten Rohrstücken oder Hülsen angeordnet sind, wobei ein gewisser Einspanneffekt des äußeren Rohrstückes zwischen innerem Rohrstück und Antriebselement erzielt werden kann. Dies ist günstig, wenn das in dieser Weise eingespannte Rohrstück besonders hohe Drehmomente zu ertragen hat. Es sind selbstverständlich auch Konfigurationen möglich, in denen bis zu drei Rohrstücke oder Hülsen ineinander liegen. Hierfür können auch andere als Festigkeitsgründe maßgeblich sein.

Nach einer ersten Weiterbildung, die verschiedene Vorteile bietet, ist bei einer im Außendurchmesser von der Mitte nach außen hin abgestuften Welle ein inneres Rohrstück vorgesehen, daß über die gesamte Wellenlänge reicht. Werden in ein mittleres Rohrstück von größerem Durchmesser zwei Rohrstücke an den Enden mit Abstand voneinander eingesteckt und mit dem äußeren Rohrstück gefügt und schließlich ein inneres durchgehendes Rohrstück in diese eingeschoben, das beidseitig die Wellenenden bildet, und durch Aufweiten mit den beiden zuerst eingeschobenen Rohrstücken gefügt, so entsteht ein mittlerer zylindrischer Hohlraum, der der Schmiermittelführung dienen kann. Dies gilt insbesondere dann, wenn in Längsabschnitten, in denen sich Rohrstücke überdecken, über axiale Teilbereiche Längsnuten ausgeführt sind, die mit dem Zylinderraum einerseits und radialen Bohrungen andererseits in Verbindung stehen.

Die vorgenannte Konstruktion bietet darüberhinaus noch eine weitere Möglichkeit, die darin besteht, daß das innere durchgehende Rohrstück im nicht abgestützten Bereich innerhalb des Zylinderraums nochmals aufgeweitet wird oder daß das äußere mittlere Rohrstück im nicht abgestützten Bereich außerhalb dieses zylindrischen Hohlraums eingerollt wird und somit eines der beiden Rohrstücke gegenüber dem anderen eine Verkürzung erfährt. Hierdurch entsteht in den beiden Rohrstücken eine gegenseitige Zug - bzw. Druckspannung, die die Biegefestigkeit erhöht und das Schwingungsverhalten günstig beeinflußt.

Nach einer zweiten günstigen Abwandlung können die Wellenenden von voneinander unabhängigen inneren Rohrstücken mit gegebenenfalls unterschiedlichen Durchmessern gebildet werden. Eine solche Ausführung ist zunächst vorteilhaft, wenn unterschiedliche Durchmesser der Endstücke gefordert sind. Darüber hinaus ensteht gegenüber der zuvorgenannten Ausführung ein Gewichtsvorteil, wobei auf die Vorteile der Schmiermittelführung nicht verzichtet zu werden braucht. Hierzu ist es günstig, wenn in ein axial mittleres äußeres Rohrstück mit größerem Außendurchmesser, wie vorher zunächst zwei kürzere Rohrstücke mit Abstand voneinander eingeschoben und durch Aufweiten mit diesem gefügt werden und anschließend vor dem Einschieben der die Wellenenden bildenden inneren Rohrstücke in diese zunächst eine dünne Blechhülse eingeschoben wird, die zwischen den radialen mittleren, zuerst eingeschobenen Rohrstücken und den inneren Rohrstücken beim Fügen eingeklemmt wird. Auch hierbei entsteht der vorher angesprochene zylindrische Schmiermittelraum.

Sollte insbesondere bei dieser Konstruktion beispielsweise die Blechhülse zu Schwingungen neigen, kann dies in günstiger Weise durch Ausschäumen der Welle mit einem der hierfür zur Verfügung stehenden bekannten Kunststoffe ohne wesentliche Gewichtsnachteile unterdrückt werden.

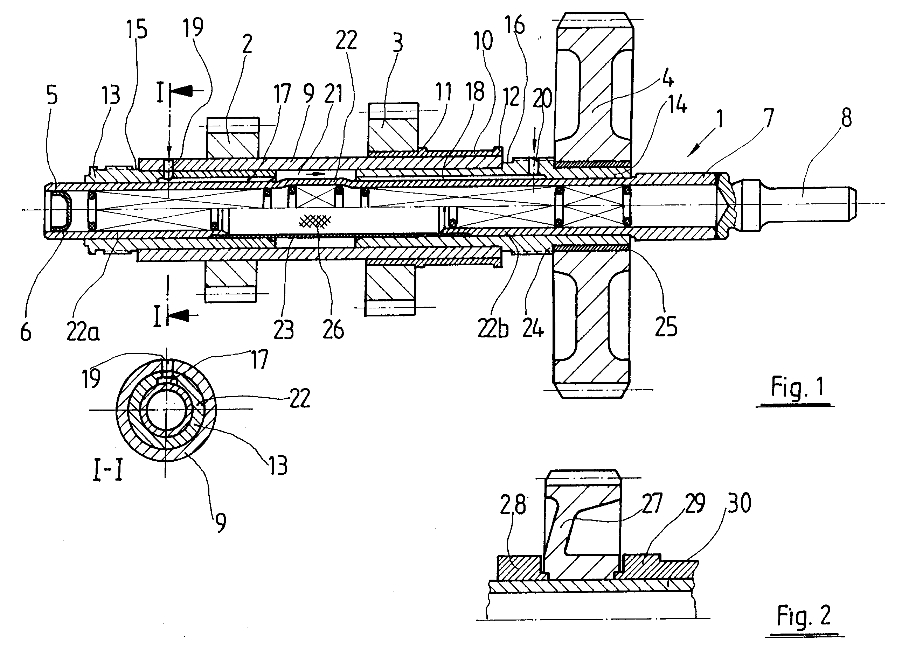

Weitere günstige Ausgestaltungsmöglichkeiten ergeben sich aus der Zeichnung, in der ein bevorzugtes Ausführungsbeispiel dargestellt ist. Die obere und die untere Hälfte der Darstellungen unterscheiden sich geringfügig voneinander.

Es ist eine Hohlwelle 1 zu erkennen, auf der drei Antriebselemente in Form von Zahnrädern 2, 3, 4 festgelegt sind. Während das eine an sich offene Wellenende 5 durch einen eingepreßten Blechdeckel 6 verschlossen ist, ist an das zweite offene Wellenende 7 ein massiver Zapfen 8 angeschweißt. Im Sinne des Fertigungsablaufes besteht die Hohlwelle 1 zunächst aus einem axial mittleren äußeren Rohrkörper 9, auf dem die Antriebselemente 2 und 3 durch Aufweiten eines entsprechenden Rohrabschnittes festgelegt sind. Auf den Rohrabschnitt 9 ist vor dem Festlegen des Antriebselements 3 eine Hülse 10 aufgeschoben, die mit einem Ende unter das Antriebselement 3 reicht und mit einem weiteren Abschnitt zwischen zwei Bundbereichen 11, 12 als Wälzlagerlaufbahn dient. Es ist möglich, in einem ersten Aufweitschritt die Hülse 10 durch entsprechendes Aufweiten des Rohrstückes 9 über die Länge der Hülse festzulegen und anschließend durch nochmaliges Aufweiten in einem Teilbereich das Antriebselement 3 zu befestigen. Genauso kann jedoch auch die Hülse 10 und das Antriebselement 3 gleichzeitig auf dem Rohrstück 9 festgelegt werden, indem dieses nur unterhalb des Antriebselementes oder über die gesamte Hülsenlänge aufgeweitet wird.

In das Rohrstück 9 sind zwei weitere Rohrstücke 13, 14 geringeren Durchmessers eingeschoben, wobei diese radiale Absätze 15, 16 zum Anschlag an den Stirnflächen des Rohrkörpers 9 aufweisen. Diese Rohrstücke 13, 14 können wiederum durch inneres hydraulisches Aufweiten in den Überdeckungsbereichen mit dem Rohrstück 9 mit diesem kraftschlüssig verbunden werden. Ähnlich wie vorher für die Hülse 10 gilt hier, daß dieser Verfahrensschritt gleichzeitig dem Verbinden des Rohrstückes 9 mit den Antriebselementen 2 und 3 dienen kann oder zeitlich einem vorherigen Fügen dieser Teile nachgeordnet sein kann. In den Rohrstücken 13, 14 sind auch in dem dargestellten Schnitt erkennbare Längsnuten 17, 18 zu erkennen, die mit radialen Bohrungen 19, 20 in Verbindung stehen, die im ersten Fall auch das Rohrstück 9 durchdringen und die miteinander über einen Zylinderraum 21 in Verbindung stehen, dessen Erzeugung nachstehend erläutert wird. Der Zylinderraum 21 entsteht dadurch, daß in die Rohrstücke 13, 14 ein durchgehendes Innenrohr 22 eingeschoben ist, das zugleich die Wellenenden 5, 7 bildet. In der mehrfach beschriebenen Weise ist dieses mit den Rohrstücken 13, 14 kraftschlüssig verbunden.

In der unteren Bildhälfte ist zu erkennen, daß die Wellenenden 5, 7 von kürzeren inneren Rohrstücken 22 a, 22 b gebildet werden, und daß vor dem Einschieben dieser Innenrohre zunächst eine Blechhülse 23 in die mittleren Rohrstücke 13, 14 eingeschoben wird, die nach dem Fügen der Rohrstücke 22 zwischen diesen und den mittleren Rohrstücken mit ihren Endbereichen eingeklemmt ist. In diesem Fall dient die Blechhülse 23 zur Ausformung des zylindrischen Hohlraumes 21. Auf das Rohrstück 14 ist in dem außen freiliegenden Bereich noch das Antriebselement 4 aufgeschoben und auf diesem festgelegt, wobei ein radialer Absatz 24 wiederum als axialer Anschlag dient. Auch hier kann wiederum die Verbindung zwischen innerem Rohr 22 und mittlerem Rohr 14 vor dem Festlegen des Antriebselements 4 oder gleichzeitig mit diesem hergestellt werden. Zur Erzeugung der erforderlichen Festigkeit kann eine Stahlhülse 25 in das aus Gußmaterial bestehende Antriebselement 4 eingegossen sein. Im Rohrinneren sind durch O-Ringe, die einander paarweise - wie durch Kreuze angedeutet - zugeordnet sind, mögliche Aufweitbereiche angedeutet. Es ist erkennbar, daß der innere Rohrkörper 22 im mittleren nicht abgestützten Bereich so aufgeweitet werden kann, daß er gegenüber dem äußeren Rohrkörper 9 eine Verkürzung erfährt und somit in den beiden Rohrkörpern eine Zug- bzw. eine Druckspannung bestehen bleibt, die die Biegefestigkeit erhöht und die Schwingungseigenschaften günstig verändert. In der unteren Bildhälfte ist andeutungsweise Dämmungsmaterial 26 dargestellt, das die Schwingungseigenschaften ebenfalls verbessern kann.

Als Einzelheit ist ein einfaches Rohrstück 30 gezeigt, auf dem unmittelbar axial anschließend an ein Antriebselement 27 zwei Hülsen 28, 29 aufgeschoben und in gleicher Weise wie dieses im wesentlichen kraftschlüssig festgelegt sind. Diese Anordnung vermeidet einen nachteiligen Torsionsfestigkeitssprung unmittelbar am Antriebselement und verhindert Mikroschlupf an dieser Stelle.

## Patentansprüche

1. Gebaute Getriebewelle, bei der einzelne Antriebselemente (2, 3, 4), insbesondere Zahnräder, drehfest auf einer Hohlwelle (1) mit in zumindest einer Richtung abgestuften Sitzdurchmessern für die Antriebselemente (2, 3, 4) festgelegt sind,
dadurch gekennzeichnet,
daß die Hohlwelle (1) zumindest aus mehreren zur Bildung der abgestuften Sitzdurchmesser für die Antriebselemente (2, 3, 4) ineinandergesteckten Rohrstücken (9, 13, 14, 22) oder Hülsen zusammengesetzt ist die im Bereich ihrer radialen Überdeckung durch Aufweiten des inneren Rohrstücks in das äußere Rohrstück im wesentlichen kraftschlüssig miteinander verbunden sind, und daß die Antriebselemente (2, 3, 4) auf den jeweiligen Rohrstücken (9, 14) oder Hülsen der Hohlwelle (1) im wesentlichen kraftschlüssig festgelegt sind.

2. Welle nach Anspruch 1,
dadurch gekennzeichnet,
daß von mehreren ineinandergesteckten Rohrstücken (9, 13, 14, 22) oder Hülsen das jeweils innere die geringste Streckgrenze des Materials und nach außen schrittweise zunehmend das jeweils äußere bzw. das Antriebselement (2, 3 , 4) die höchste Streckgrenze des Materials aufweist.

3. Welle nach Anspruch 1 oder 2,
dadurch gekennzeichnet,
daß jeweils in Richtung des Drehmomentflusses, d.h. einseitig oder beidseitig axial anstoßend an ein Antriebselement (27) Hülsen (28, 29) auf das Rohrstück (30) aufgeschoben und zur Vermeidung eines Steifigkeitssprunges in der Torsionsfestigkeit unmittelbar am Antriebselement in gleicher Weise festgelegt sind.

4. Welle nach Anspruch 3,
dadurch gekennzeichnet,
daß die Streckgrenze des Materials eines Antriebselements (2, 3, 4) höher liegt als die Streckgrenze des Materials des jeweils darunterliegenden Rohrkörpers (9, 14)

5. Welle nach einem der Ansprüche 1 bis 4,
dadurch gekennzeichnet,
daß ein Antriebselement (2, 3, 4) jeweils im Bereich der Überdeckung von zumindest zwei ineinandergesteckten Rohrstücken (9, 13, 14, 22) angeordnet ist.

6. Welle nach einem der Ansprüche 1 bis 5,
dadurch gekennzeichnet,
daß ein inneres Rohrstück (22) über die gesamte Wellenlänge reicht.

7. Welle nach einem der Ansprüche 1 bis 5,
dadurch gekennzeichnet,
daß die Wellenenden (5, 7) von voneinander unabhängigen inneren Rohrstücken (22a, 22b) mit gegebenenfalls unterschiedlichen Durchmessern gebildet werden.

8. Welle nach einem der Ansprüche 1 bis 7,
dadurch gekennzeichnet,
daß innere und/oder äußere Längsnuten (17, 18) in einzelnen Rohrstücken (13, 14), die über axiale Teilabschnitte reichen und mit radialen Bohrungen (19, 20) verbunden sind, als Schmierölkanäle vorgesehen sind.

9. Welle nach einem der Ansprüche 1 bis 8,
dadurch gekennzeichnet,
daß zwischen einem äußeren Rohrstück (9), darin eingeschobenen mit Abstand voneinander festgelegten Rohrstücken (13, 14) und einem in diese eingeschobenen Rohrstück (22) bzw. einer in diese eingeschobenen Hülse (23), die mittels weiteren Rohrstücken (22a, 22b) festgelegt ist, ein zylindrischer Hohlraum als Schmierölführung gebildet ist.

10. Welle nach Anspruch 9,
dadurch gekennzeichnet,
daß der zylindrische Hohlraum (21) mit Längsnuten (17, 18) und/oder mit radialen Bohrungen (19, 20) zur Schmiermittelführung verbunden ist.

11. Welle nach einem der Ansprüche 1 bis 10,
dadurch gekennzeichnet,
daß als Lagerstellen dienende Hülsen (10) auf die Rohrstücke (9) aufgeschoben und auf diesen festgelegt sind.

12. Welle nach Anspruch 11,
dadurch gekennzeichnet,
daß die als Lagerstellen dienende Hülsen (10) in benachbarte Antriebselemente (3) eingeschoben und mit diesen auf den Rohrstücken (9) festgelegt sind.

13. Welle nach einem der Ansprüche 1 bis 12,
dadurch gekennzeichnet,
daß der innere Hohlraum der Rohrstücke (9, 13, 14, 22) mit Schaumstoff (26) verfüllt ist.

14. Welle nach einem der Ansprüche 1 bis 13,
dadurch gekennzeichnet,
daß Antriebselemente (4) aus Gußteilen mit eingegossener Stahlhülse (25) bestehen.

15. Verfahren zur Herstellung einer gebauten Getriebewelle nach einem der Ansprüche 1 bis 14, bei der einzelne Antriebselemente (2, 3, 4), insbesondere Zahnräder, drehfest auf einer Hohlwelle (1) mit in zumindest einer Richtung abgestuften Sitzdurchmessern für die Antriebselemente (2, 3, 4) festgelegt sind,
dadurch gekennzeichnet,
daß mehrere Rohrstücke (9, 13, 14, 22) oder Hülsen zur Bildung der Hohlwelle (1) mit abgestuften Sitzdurchmessern für die Antriebselemente (2, 3, 4) ineinandergesteckt werden und jeweils der innere Rohrabschnitt (13, 14, 22) eines dadurch gebildeten Überdeckungsbereiches zur im wesentlichen kraftschlüssigen Verbindung von innen gegenüber dem jeweils äußeren Rohrabschnitt (9, 14) aufgeweitet wird.

16. Verfahren nach Anspruch 15,
dadurch gekennzeichnet,
daß mehrere Rohrstücke (9, 13, 14, 22) oder Hülsen und ein darauf festzulegendes Antriebselement (2, 3, 4) ineinandergesteckt und zur Bildung der abgestuften Hohlwelle (1) und zur Festlegung des Antriebselementes (2, 3, 4) der innere Rohrabschnitt (13, 14, 22) eines dadurch gebildeten Überdeckungsbereiches zumindest innerhalb des Antiebselementes (2, 3, 4) von innen gegenüber dem äußeren Rohrabschnitt (9, 14) und dem Antriebselement (2, 3, 4) aufgeweitet wird.

17. Verfahren nach einem der Ansprüche 15 oder 16,
dadurch gekennzeichnet,
daß die Aufweitschritte in radialer Richtung von außen nach innen erfolgen.

18. Verfahren nach einem der Ansprüche 15 oder 16,
dadurch gekennzeichnet,
daß die Aufweitschritte axial von der Wellenmitte nach außen oder in einer Richtung fortschreitend erfolgen.

19. Verfahren nach einem der Ansprüche 15 bis 18,
dadurch gekennzeichnet,
daß das Aufweiten auf hydraulischem Wege mittels einer einen abgedichteten axialen Abschnitt beaufschlagenden Druckmittelsonde erfolgt.

20. Verfahren nach einem der Ansprüche 15 bis 19,
dadurch gekennzeichnet,
daß als Lagerstellen dienende äußere Hülsen (10) vor dem Fügen gehärtet und gegebenenfalls geschliffen sind.

21. Verfahren nach einem der Ansprüche 15 bis 20,
dadurch gekennzeichnet,
daß von zwei mit radialem Abstand zueinanderliegenden inneren bzw. äußeren Rohrstücken (22; 9), zwischen denen zwei mittlere Rohrstücke (13, 14) eingespannt sind, nach dem Verbinden aller Rohrstücke das eine zum Zwecke einer Verkürzung aufgeweitet bzw. eingedrückt wird, so daß in den gegeneinander berührungsfreien und nicht in Kontakt mit den mittleren Rohrstücken (13, 14) stehenden Abschnitten eine in axialer Richtung wirkende Zug- bzw. Druckspannung aufgebaut wird.

22. Sonde zur Durchführung des Verfahrens nach einem der Ansprüche 15 bis 21, bei dem Verbindungen zwischen ineinandergesteckten Rohrstücken (9, 13, 14, 22) und Hülsen durch Aufweiten der jeweils inneren an verschiedenen Längsabschnitten mit untereinander unterschiedlichen Materialquerschnitten und/oder Materialqualitäten/hergestellt werden,
dadurch gekennzeichnet,
daß die Sonde verschiedene innere Druckmittelzuführungsbohrungen aufweist, die unterschiedliche Druckhöhen in einzelnen durch Dichtungen voneinander abgetrennten begrenzten Aufweitbereichen bewirken.

## Claims

1. A built-up transmission shaft in which individual drive elements (2, 3, 4), in particular gears, are non-rotatably fixed on a hollow shaft (1) with seating diameters, which are stepped in at least one direction, for the drive elements (2, 3, 4), characterised in that the hollow shaft (1) is composed at least of a plurality of tubes or tubular portions (9, 13, 14, 22) which are fitted into each other for forming the stepped seating diameters for the drive elements (2, 3, 4) and which are substantially force-lockingly connected together in the region of their radial overlap by expansion of the inner tubular portion into the outer tubular portion, and that the drive elements (2, 3, 4) are substantially force-lockingly fixed on the respective tubes or tubular portions (9, 14) of the hollow shaft (1).

2. A shaft according to claim 1 characterised in that of a plurality of tubes or tubular portions (9, 13, 14, 22) which are fitted one into the other, the respective inner one has the lowest elastic limit of the material and, increasing stepwise outwardly, the respective outer one or the drive element (2, 3, 4) has the highest elastic limit of the material.

3. A shaft according to claim 1 or claim 2 characterised in that tubes (28, 29) are pushed on to the tubular portion (30) axially abutting against a drive element (27) in the respective direction of the flow of torque, that is to say at one or both sides, and are substantially force-lockingly fixed in the same manner to prevent a sudden change in stiffness in respect of torsional strength immediately at the drive element.

4. A shaft according to claim 3 characterised in that the elastic limit of the material of a drive element (2, 3, 4) is higher than the elastic limit of the material of the respective tubular body (9, 14) disposed therebeneath.

5. A shaft according to one of claims 1 to 4 characterised in that at least one drive element (2, 3, 4) is arranged in the respective region of overlap of at least two tubular portions (9, 13, 14, 22) which are fitted one into the other.

6. A shaft according to one of claims 1 to 5 characterised in that an inner tubular portion (22) extends over the entire length of the shaft.

7. A shaft according to one of claims 1 to 5 characterised in that the shaft ends (5, 6) are formed by mutually independent inner tubular portions (22a, 22b) of possibly different diameters.

8. A shaft according to one of claims 1 to 7 characterised in that inner and/or outer longitudinal grooves (17, 18) are provided as lubricating oil passages in individual tubular portions (13, 14) which extend over axial parts and which are connected to radial bores (19, 20).

9. A shaft according to one of claims 1 to 8 characterised in that a cylindrical cavity is formed as a lubricating oil guide means between an outer tubular portion (9), tubular portions (13, 14) which are inserted therein and fixed at a spacing from each other, and a tubular portion (22) which is inserted into same or a tube (23) inserted into same, which is fixed by means of further tubular portions (22a, 22b).

10. A shaft according to claim 9 characterised in that the cylindrical cavity (21) is communicated with longitudinal grooves (17, 18) and/or with radial bores (19, 20) for carrying lubricant.

11. A shaft according to one of claims 1 to 10 characterised in that tubes (10) serving as mounting locations are pushed on to the tubular portions (9) and fixed on same.

12. A shaft according to claim 11 characterised in that the tubes (10) serving as mounting locations are partially inserted into drive elements (3) adjacent to them and are fixed with same on the tubular portions (9).

13. A shaft according to one of claims 1 to 12 characterised in that the inner space of the tubular portions (9, 13, 14, 22) is filled with foam (26).

14. A shaft according to one of claims 1 to 13 characterised in that drive elements (4) comprise castings with a steel tube (25) cast therein.

15. A process for the production of a built-up transmission shaft according to one of claims 1 to 14, in which transmission shaft individual drive elements (2, 3, 4), in particular gears, are non-rotatably fixed on a hollow shaft (1) with seating diameters, which are stepped in at least one direction, for the drive elements (2, 3, 4), characterised in that a plurality of tubular portions (9, 13, 14, 22) or tubes for forming the hollow shaft (1) with stepped seating diameters for the drive elements (2, 3, 4) are fitted one into the other and the respective inner tubular portion (13, 14, 22) of an overlap region formed thereby is expanded from the inside relative to the respective outer tubular portion (9, 14) for substantially force-locking connection thereof.

16. A process according to claim 15 characterised in that a plurality of tubular portions (9, 13, 14, 22) or tubes and a drive element (2, 3, 4) to be fixed thereon are fitted one into the other and to form the stepped hollow shaft (1) and for fixing the drive element (2, 3, 4) the inner tubular portion (13, 14, 22) of an overlap region formed thereby is expanded at least within the drive element (2, 3, 4) from the inside relative to the outer tubular portion (9, 14) and the drive element (2, 3, 4).

17. A process according to one of claims 15 and 16 characterised in that the expansion steps are effected in a radial direction from the outside inwardly.

18. A process according to one of claims 15 and 16 characterised in that the expansion steps are effected axially from the middle of the shaft outwardly or in one direction progressively.

19. A process according to one of claims 15 to 18 characterised in that the expansion operation is effected hydraulically by means of a pressure fluid probe which acts on a sealed axial portion.

20. A process according to one of claims 15 to 19 characterised in that outer tubes (10) which serve as mounting locations are mounted in position, said tubes being hardened and possibly ground prior to the joining operation.

21. A process according to one of claims 15 to 20 characterised in that of two inner and outer tubular portions (22; 9) which are disposed at a radial spacing from each other and between which are clamped two central tubular portions (13, 14), after the step of connecting all tubular portions, the one is expanded or pressed inwardly respectively for the purposes of producing a reduction in length, so that a tensile or compression stress acting in the axial direction is produced in the regions which are contact-free relative to each other and which are not in contact with the central tubular portions (13, 14).

22. A probe for carrying out the process according to one of claims 15 to 21 in which connections are produced between tubes and tubular portions (9, 13, 14, 22) which are fitted one into the other by expansion of the respective inward ones at different longitudinal sections with mutually different material cross-sections and/or material qualities, characterised in that the probe has various internal pressure fluid feed bores which produce different pressure levels in individual expansion regions which are separated from each other by seals.

## Revendications

1. Arbre de transmission en plusieurs pièces, dans lequel des éléments d'entraînement individuels (2, 3, 4), notamment des roues dentées, sont fixés en solidarité de rotation sur un arbre creux (1) présentant des diamètres d'assise en gradins dans au moins une direction pour les éléments d'entraînement (2, 3, 4), **caractérisé** en ce que l'arbre creux (1) est constitué au moins de plusieurs tronçons tubulaires (9, 13, 14, 22) ou douilles, qui sont mutuellement emboîtés afin de former les diamètres d'assise en gradins pour les éléments d'entraînement (2, 3, 4), et qui, dans la région de leur chevauchement radial, sont assemblés entre eux essentiellement par adhérence, par élargissement du tronçon tubulaire intérieur dans le tronçon tubulaire extérieur, et en ce que les éléments d'entraînement (2, 3, 4) sont fixés en position essentiellement par adhérence sur les tronçons tubulaires respectifs (9, 14), ou douilles, de l'arbre creux (1).

2. Arbre selon la revendication 1, **caractérisé** en ce que, parmi plusieurs tronçons tubulaires (9, 13, 14, 22) ou douilles mutuellement emboîtés, le tronçon chaque fois intérieur présente la plus faible limite d'élasticité du matériau et, avec une augmentation progressive vers l'extérieur, le tronçon chaque fois extérieur, ou l'élément d'entraînement (2, 3, 4), présente la plus haute limite d'élasticité du matériau.

3. Arbre selon la revendication 1 ou 2, **caractérisé** en ce que des douilles (28, 29) sont enfilées sur l'élément tubulaire (30) chaque fois dans la direction du flux de moment de torsion, c'est-à-dire en aboutement axial d'un côté ou des deux côtés contre un élément d'entraînement (27), et, afin d'éviter un saut de rigidité dans la résistance à la torsion, sont fixées en position directement contre l'élément d'entraînement et de la même manière, essentiellement par adhérence.

4. Arbre selon la revendication 3, **caractérisé** en ce que la limite d'élasticité du matériau d'un élément d'entraînement (2, 3, 4) est supérieure à la limite d'élasticité du matériau du corps tubulaire (9, 14) respectivement sous-jacent.

5. Arbre selon l'une quelconque des revendications 1 à 4, **caractérisé** en ce qu'au moins un élément d'entraînement respectif (2, 3, 4) est disposé dans la région du chevauchement d'au moins deux tronçons tubulaires (9, 13, 14, 22) mutuellement emboîtés.

6. Arbre selon l'une quelconque des revendications 1 à 5, **caractérisé** en ce qu'un tronçon tubulaire intérieur (22) s'étend sur toute la longueur de l'arbre.

7. Arbre selon l'une quelconque des revendications 1 à 5, **caractérisé** en ce que les extrémités (5, 7) de l'arbre sont formées par des tronçons tubulaires (22a, 22b) indépendants l'un de l'autre, présentant éventuellement des diamètres différents.

8. Arbre selon l'une quelconque des revendications 1 à 7, **caractérisé** en ce que des rainures longitudinales intérieures et/ou extérieures (17, 18), qui s'étendent sur des régions axiales partielles et sont reliées par des perçages radiaux (19, 20), sont prévues comme canaux de lubrifiant dans des tronçons tubulaires respectifs (13, 14).

9. Arbre selon l'une quelconque des revendications 1 à 8, **caractérisé** en ce qu'une cavité cylindrique est formée, comme guidage de lubrifiant, entre un tronçon tubulaire extérieur (9), des tronçons tubulaires (13, 14) enfilés dans ce dernier en étant fixés en position à distance l'un de l'autre, et un tronçon tubulaire (22) enfilé dans ces tronçons tubulaires (13 14), ou une douille (23) enfilée dans ces tronçons tubulaires (13, 14) et fixée en position au moyen de tronçons tubulaires supplémentaires (22a, 22b).

10. Arbre selon la revendication 9, **caractérisé** en ce que la cavité cylindrique (21) est reliée à des rainures longitudinales (17, 18) et/ou à des perçages radiaux (19, 20) pour le guidage du lubrifiant.

11. Arbre selon l'une quelconque des revendications 1 à 10, **caractérisé** en ce que des douilles (10) servant d'éléments de palier sont enfilées sur les tronçons tubulaires (9) et fixées en position sur ces derniers.

12. Arbre selon la revendication 11, **caractérisé** en ce que les douilles (10) servant d'éléments de palier sont partiellement enfilées dans des éléments d'entraînement (3) qui leur sont voisins, et fixées en position avec ces derniers sur les tronçons tubulaires (9).

13. Arbre selon l'une quelconque des revendications 1 à 12, **caractérisé** en ce que la cavité intérieure des tronçons tubulaires (9, 13, 14, 22) est remplie de produit alvéolaire (26).

14. Arbre selon l'une quelconque des revendications 1 à 13, **caractérisé** en ce que des éléments d'entraînement (4) sont constitués d'une pièce de fonderie dans laquelle est coulée une douille en acier (25).

15. Procédé de fabrication d'un arbre de transmission en plusieurs pièces selon l'une quelconque des revendications 1 à 14, dans lequel des éléments d'entraînement individuels (2, 3, 4), notamment des roues dentées, sont fixés en solidarité de rotation sur un arbre creux (1) présentant des diamètres d'assise en gradins dans au moins une direction pour les éléments d'entraînement (2, 3, 4), **caractérisé** en ce que plusieurs tronçons tubulaires (9, 13, 14, 22), ou douilles, sont mutuellement emboîtés pour former l'arbre creux (1) présentant des diamètres d'assise en gradins pour les éléments d'entraînement (2, 3, 4), et le tronçon tubulaire chaque fois intérieur (13, 14, 22) d'une région de chevauchement ainsi formée est, afin d'obtenir un assemblage essentiellement par adhérence, élargi de l'intérieur par rapport au tronçon tubulaire extérieur respectif (9, 14).

16. Procédé selon la revendication 15, **caractérisé** en ce que plusieurs tronçons tubulaires (9, 13, 14, 22) ou douilles, et un élément d'entraînement (2, 3, 4) à fixer en position sur ces derniers, sont mutuellement emboîtés et, afin de former l'arbre creux (1) à gradins et afin de fixer en position l'élément d'entraînement (2, 3, 4), le tronçon tubulaire intérieur (13, 14, 22) d'une région de chevauchement ainsi formée est, au moins à l'intérieur de l'élément d'entraînement (2, 3, 4), élargi de l'intérieur par rapport au tronçon tubulaire extérieur (9, 14) et à l'élément d'entraînement (2, 3, 4).

17. Procédé selon la revendication 15 ou 16, **caractérisé** en ce que les étapes d'élargissement s'effectuent en direction radiale, de l'extérieur vers l'intérieur.

18. Procédé selon la revendication 15 ou 16, **caractérisé** en ce que les étapes d'élargissement s'effectuent axialement, depuis le milieu de l'arbre vers l'extérieur ou progressivement dans une direction.

19. Procédé selon l'une quelconque des revendications 15 à 18, **caractérisé** en ce que l'élargissement s'effectue par voie hydraulique, au moyen d'une sonde à fluide sous pression sollicitant une région axiale hermétiquement fermée.

20. Procédé selon l'une quelconque des revendications 15 à 19, **caractérisé** en ce que des douilles extérieures (10) servant d'éléments de palier sont mises en place, et sont trempées et éventuellement rectifiées avant l'assemblage.

21. Procédé selon l'une quelconque des revendications 15 à 20, **caractérisé** en ce que, parmi deux tronçons tubulaires respectivement intérieur et extérieur (22 ; 9), tournés l'un vers l'autre à distance radiale et entre lesquels sont serrés deux tronçons tubulaires intermédiaires (13, 14), l'un est, une fois tous les tronçons tubulaires assemblés, élargi ou, respectivement, écrasé afin d'obtenir une réduction, de sorte qu'une contrainte de traction ou, respectivement, de pression, agissant en direction axiale, est établie dans les régions qui ne sont en contact, ni entre elles, ni avec les tronçons tubulaires intermédiaires (13, 14).

22. Sonde pour la mise en oeuvre du procédé selon l'une quelconque des revendications 15 à 21, selon lequel des assemblages sont réalisés entre des tronçons tubulaires (9, 13, 14, 22) mutuellement emboîtés et des douilles, par élargissement des tronçons respectivement intérieurs sur différentes régions longitudinales présentant des sections de matériau et/ou des qualités de matériau respectives différentes,
**caractérisée** en ce que la sonde présente différents perçages intérieurs d'alimentation en fluide sous pression, qui produisent différents niveaux de pression dans des régions d'élargissement individuel les délimitées, séparées les unes des autres par des joints d'étanchéité.
